# EUROPÄISCHE PATENTSCHRIFT

(11) **EP 3 080 483 B1**
(45) Veröffentlichungstag und Bekanntmachung des Hinweises auf die Patenterteilung: **20.02.2019**
(21) Anmeldenummer: 14821500.7
(22) Anmeldetag: 11.12.2014
(51) Int. Cl.: F16H 57/00

(54) **VERFAHREN ZUM EINLAUFEN EINES SCHNECKENRADGETRIEBES**
METHOD FOR THE RUNNING IN OF A WORM-WHEEL GEAR
PROCÉDÉ DE RODAGE D'UN ENGRENAGE À VIS SANS FIN

(30) Priorität: 13.12.2013 DE 102013020599
(43) Veröffentlichungstag der Anmeldung: 19.10.2016
(73) Patentinhaber: ThyssenKrupp Presta AG, 9492 Eschen (LI); thyssenkrupp AG, 45143 Essen (DE)
(72) Erfinder: STROBEL, Joseph-Léon, FL-9493 Mauren (LI); SCHWARZHANS, Paul, A-6800 Feldkirch (AT)
(74) Vertreter: thyssenkrupp Intellectual Property GmbH
(86) Internationale Anmeldenummer: PCT/EP2014/003326
(87) Internationale Veröffentlichungsnummer: WO 2015/086156

(56) Entgegenhaltungen:
- DE-A1- 10 123 767
- DE-A1-102010 002 285
- DE-U1- 20 221 954

## Beschreibung

Die vorliegende Erfindung betrifft ein Verfahren zum Einlaufen eines Schneckenradgetriebes einer elektromechanischen Lenkung mit den Merkmalen des Oberbegriffs des Anspruchs 1 und eine entsprechende elektromechanische Lenkung. So ein Verfahren ist aus dem gattungsgemässen Dokument DE20221954U bekannt. Eine gattungsgemäße elektromechanische Lenkung weist einen elektrischen Servomotor auf, der eine Schneckenwelle antreibt, die mit einem auf einer Eingangswelle eines Lenkgetriebes angeordneten Schneckenrad kämmt, wobei das Schneckenrad mit einer Eingangswelle des Lenkgetriebes in Wirkverbindung steht und wobei die Schneckenwelle und die Eingangswelle in einem Getriebegehäuse drehbar gelagert sind. Dabei können die Schneckenwelle und die Eingangswelle in einem einzigen gemeinsamen Gehäuse, aber auch in einem mehrteiligen oder gar in mehreren Getriebegehäusen gelagert sein.
Eine derartige Servolenkung stellt relativ hohe Anforderungen an die Exaktheit der Bauteile. Insbesondere muss der Verzahnungseingriff des Schneckenrads und der Schneckenwelle möglichst genau sein, um eine gute Kraft- und Drehmomentübertragung bei geringer Geräuschentwicklung zu gewährleisten. Weiterhin sind bei Lenksystemen ständig wechselnde Drehbewegungen zu erwarten, die entsprechend von einem derartigen Getriebe ohne Spiel übertragen werden müssen.
Es sind eine Vielzahl solcher Getriebe bekannt, beispielsweise aus DE 10 2010 003 727 A1, DE 10 2010 002 285 A1 und EP 2 423 075 A2. Allgemein beinhalten viele dieser Hilfskraftunterstützungen Mittel, um das axiale oder radiale Spiel des Verzahnungseingriffs durch Federn auszugleichen, wobei es auch vorgesehen sein kann, wie in der DE 10 2010 002 285 A1 offenbart, mittels Nacheinstelleinrichtung einen großen Anteil des Spiels oder ein Basisspiel zu beseitigen und durch entsprechende Anfederungen verbleibende Restspiele oder Wechselbelastungen zu kompensieren.
Aus der Offenlegungsschrift DE 198 24 382 A1 ist es bekannt, ein Grundspiel in einem vorhergehend beschriebenen Getriebe bei der Montage einmalig einzustellen und dann festzusetzen.
Die vorgehend genannten Maßnahmen zum Einstellen des Spiels zwischen den Zahnflanken im Getriebeeingriff erfordern einen hohen technischen Aufwand, um die Verzahnungseingriffe optimal zu gestalten bzw. die Verzahnungen optimal aneinander anzupassen. Hierzu müssen sehr enge Toleranzen eingehalten werden, die hohe Kosten verursachen.

In der DE 202 21 95 U1 wird eine gegenseitige Anpassung von Schneckenwelle und Schneckenrad beschrieben, bei dem ein Antriebsbetrieb unter hoher Last durchgeführt wird, ein sogenannter "Hochlast-Einfahrbetrieb". Nach diesem Bearbeitungsschritt muss jedoch ebenfalls aufwendig das Spiel eingestellt werden.

Aus der DE 10 2010 002 285 A1 ist weiterhin die Möglichkeit eines Einsatzes eines Kunststoffzahnkranzes für das Schneckenrad bekannt. Derartige Kunststoffverzahnungen werden eingesetzt, um Schlaggeräusche zu dämpfen und eine gewisse Elastizität ins System zu bringen, damit eventuell vorhandene Toleranzschwankungen ausgeglichen werden können. Im Fall von elektrischen Servolenkungen sind die Kräfte, die an den Zahnflanken angreifen, jedoch derartig hoch, dass mit einem entsprechend hohen Verschleiß der Kunststoffverzahnung gerechnet werden muss, falls die Dämpfungseigenschaften tatsächlich ausgenutzt werden sollen. Alternativ können feste Kunststoffe eingesetzt werden, bei denen es allerdings im Betrieb nicht zu den gewünschten Dämpfungen kommt.

Es ist deshalb Aufgabe der vorliegenden Erfindung, ein Verfahren zum Einlaufen eines Schneckenradgetriebes einer elektromechanischen Lenkung und eine elektromechanische Lenkung mit eingelaufenem Schneckenradgetriebe bereitzustellen, wobei das eingelaufene Schneckenradgetriebe eine sehr gute Kraft- und Drehmomentübertragung mit geringem Spiel bei niedrigen Anforderungen an die Fertigungspräzision der Getriebezahnräder aufweist.

Diese Aufgabe wird von einem Verfahren mit den Merkmalen des Anspruchs 1 und eine elektromechanische Lenkung mit den Merkmalen des Anspruchs 10 gelöst.

Danach ist ein Verfahren zum Einlaufen eines Schneckengetriebes einer elektromechanischen Lenkung, wobei die elektromechanische Lenkung einen elektrischen Motor, eine Schneckenwelle mit einem motornahen Ende und einem motorfernen Ende, ein auf einer Ausgangs- oder Eingangswelle angeordnetes Schneckenrad und ein Getriebegehäuse aufweist, wobei der Motor mit der Schneckenwelle wirkverbunden ist und die Schneckenwelle mit dem Schneckenrad in einem Eingriff steht, mit folgenden Verfahrensschritten vorgesehen:
a) Erstellen eines vormontierten Zustandes der elektromechanischen Servolenkung, bei dem ein Ende der Schneckenwelle, das motornahe Ende oder das motorferne Ende in einem Lager drehbar im Getriebegehäuse gelagert ist und das jeweils andere Ende der Schneckenwelle zur Bildung eines freien Endes in Radialrichtung beweglich ist;
b) Drehbares Lagern des freien Endes der Schneckenwelle in einer einstellbaren Vorspanneinrichtung, die dazu eingerichtet ist, die Schneckenwelle in dem Eingriff in Richtung auf das Schneckenrad vorzuspannen und gekennzeichnet durch
c) Einstellen der Vorspanneinrichtung mittels einer Steuereinrichtung zur Erzeugung einer definierten Vorspannung des Eingriffs;
d) rotatorisches Antreiben der Schneckenwelle in Abhängigkeit von der Steuereinrichtung mit einer definierten Drehzahl über einen bestimmten Zeitraum.
Durch den zuvor beschriebenen Einlaufprozess gleicht sich die Verzahnung des Schneckenrads an die Verzahnung der Schneckenwelle an und die Betriebseigenschaften des Getriebes werden optimiert. Die Vorspanneinrichtung kann dabei an dem motornahen oder an dem motorfernen Ende der Schneckenwelle angebracht sein. Der Einlaufprozess kann dabei sowohl mit einem speziellen Antriebsmotor durchgeführt werden, als auch mit dem elektrischen Motor der elektromechanischen Lenkung (=Servolenkung). Bevorzugt wird jedoch der spezielle Antriebsmotor eingesetzt, da auf eine elektrische Kontaktierung des elektrischen Motors der Servolenkung verzichtet werden kann und ein speziell geeigneter Motor eingesetzt werden kann. Entsprechend erfolgt bevorzugt die Montage des elektrischen Motors der Lenkung erst nach erfolgtem Einlaufprozess in dieser bevorzugten Variante.
Als Werte für die Vorspannung sind Vorspannkräfte im Bereich von 100N bis 1000N anwendbar. Alternativ zu der in c) genannten Erzeugung einer definierten Vorspannung kann auch ein vordefinierter Zustellweg eingestellt werden.
Dabei ist es vorteilhaft, wenn zwischen dem Verfahrensschritt b) und dem Verfahrensschritt c) folgende Schritte vorgesehen sind:
e) Ausmessen eines Hochpunkts des Schneckenrads mittels der Vorspanneinrichtung durch Drehen der Schneckenwelle;
f) Einstellen des Verzahnungseingriffs von Schneckenrad und Schneckenwelle auf den Hochpunkt des Schneckenrads.
Somit wird die definierte Vorspannung beim Eingriff des Hochpunkts des Schneckenrads in die Schneckenwelle eingestellt.
Alternativ kann auch der Tiefpunkt des Schneckenrades mittels der Vorspanneinrichtung durch Drehen der Schneckenwelle ausgemessen werden und entsprechend des Verzahnungseingriffs von Schneckenrad und Schneckenwelle auf den Tiefpunkt des Schneckenrades erfolgen.

Auch eine Kombination mit der Messung des Hochpunktes und des Tiefpunktes ist möglich. In diesem Fall kann die Einstellung des Verzahnungseingriffs entweder auf den Hochpunkt oder auf Tiefpunkt oder einen Zwischenwert erfolgen. Der Zwischenwert muss nach Versuchen bestimmt werden.

Zudem können nach dem Verfahrensschritt d) folgende Schritte vorgesehen seien:
g) Reduzieren der Vorspannung mittels der Steuereinrichtung auf maximal 20% des definierten Wertes der Vorspannung, bevorzugt auf Null;
h) Einleiten eines Schmiermittels bei laufendem Schneckengetriebe.

Im noch erwärmten Zustand des laufenden Schneckengetriebes verteilt sich das Schmiermittel besonders gut und dient auch zur Abkühlung des Getriebes am Ende des Einlaufprozesses.

Es ist vorteilhaft, wenn nach dem Einstellen der Vorspannung das freie Ende der Schneckenwelle zur Festlegung einer definierten Drehachse an einer festen Position gehalten wird, so dass sich das Schneckenrad an die Schneckenwelle optimal anpassen kann.

Vorzugsweise wird während des Verfahrensschrittes c) eine bestimmte Kraft/Zeit-Kurve und/oder Drehzahl/Zeit-Kurve abgefahren. Dazu steuert die Steuereinrichtung die Vorspanneinrichtung und den Motor.

In einer Ausführungsform ist vorgesehen, dass während des Verfahrensschrittes d) in einer ersten Phase, die Schneckenwelle mit einer Drehzahl im Bereich von 500 U/min bis 5000 U/min für einen Zeitraum im Bereich von 5s bis 60 s angetrieben wird und in einer weiteren Phase während der Verfahrensschritte g) und h), die Schneckenwelle mit einer Drehzahl im Bereich von 100 U/min bis 1000 U/min für einen Zeitraum im Bereich von 2s bis 30 s angetrieben wird.

Vorzugsweise ist das Schneckenrad aus Kunststoff hergestellt. Dabei kann der Kunststoff so fest sein, dass er keine besonderen dämpfenden Eigenschaften aufweist z.B. um allfällige Toleranzschwankungen des Getriebes auszugleichen, denn durch den Einlaufprozess wird der Kunststoff durch die Reibung im Getriebe erwärmt bzw. aufgeschmolzen, wodurch sich die Verzahnung des Kunststoffschneckenrads an die Verzahnung der Schneckenwelle anpasst.

Das eingelaufene Schneckengetriebe kann nach dem Einlaufprozess in elektromechanische Lenkkraftunterstützungen, Überlagerungslenkungen oder Feedbackaktuatoren von Steer-by-wire Lenkungen eingebaut werden.

In einer Ausführungsform ist das Schneckenrad als Spritzgussteil gefertigt. Bei dem Einlaufprozess, während des Verfahrensschrittes d), werden dann vorteilhaft Molekülketten der Gusshaut im Bereich der tragenden Oberfläche des Kunststoffschneckenrads unterbrochen, so dass sich Fetttaschen ausbilden, die Schmiermittel zur Schmierung des Getriebes aufnehmen können. Im Einlaufprozess des Getriebes kommt es somit zu einer Oberflächenmodifikation des Kunststoffschneckenrads; die sehr glatte Gusshaut, an der Schmiermittel üblicherweise schlecht haften, wird durch den Einlaufprozess so bearbeitet, dass die Oberfläche nach dem Einlaufen mit einer Schmiermittel haltenden Oberflächenstruktur ausgestattet ist. Die Fetttaschen dienen als eine Vielzahl von kleinen Schmiermitteldepots, die das Schmiermittel besonders dauerhaft halten und die bereits durch eine geringe Menge an Schmiermittel ausreichend gefüllt werden können.

Weiterhin ist eine elektromechanische Lenkung mit einem nach dem vorhergenannten Verfahren eingelaufenen Schneckengetriebe vorgesehen.

Nachfolgend wird ein Ausführungsbeispiel der vorliegenden Erfindung anhand der Zeichnungen beschrieben. Gleiche Bauteile oder Bauteile mit gleichen Funktionen tragen gleiche Bezugszeichen. Es zeigen:
- Figur 1:: das Getriebe einer Servolenkung in einem Längsschnitt entlang der Schneckenwelle während des Einlaufens in einem vormontierten Zustand, sowie
- Figur 2:: das Getriebe einer Servolenkung in einem Längsschnitt entlang der Schneckenwelle im eingebauten Zustand.

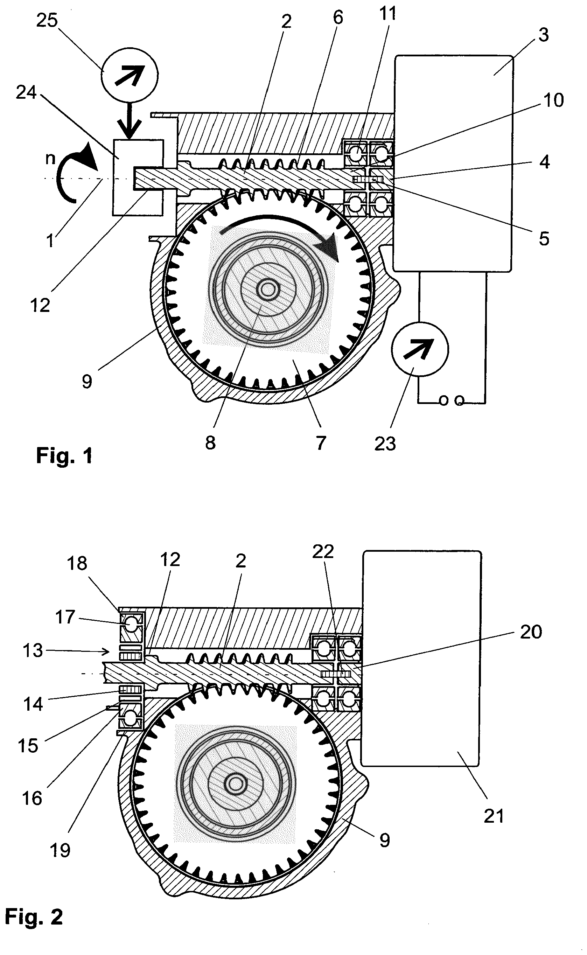

In der Figur 1 ist in einem Längsschnitt das Getriebe einer elektromechanischen Servolenkung während des Einlaufens in einem vormontierten Zustand dargestellt. Der Längsschnitt verläuft dabei entlang einer Drehachse 1 einer Schneckenwelle 2, die von einem Elektromotor 3 angetrieben ist. Der Elektromotor 3 verfügt über eine Motorwelle 4, die über eine flexible Kupplung 5 mit der Schneckenwelle 2 drehfest gekoppelt ist. Die Schneckenwelle 2 kämmt über eine Schneckenverzahnung 6 mit einem Schneckenrad 7. Das Schneckenrad 7 wiederum ist drehfest mit einer Lenkwelle 8 verbunden, die zwischen einem nicht dargestellten Lenkrad und dem eigentlichen Lenkgetriebe des Kraftfahrzeugs verläuft, das ebenfalls nicht dargestellt ist. Die genannten Bauelemente sind im Beispiel in einem gemeinsamen Getriebegehäuse 9 gelagert.

Die Lagerung der Schneckenwelle 2 in dem Gehäuse 9 erfolgt an einem motorseitigen Ende 10 der Schneckenwelle 2 im Beispiel in einem konventionellen Wälzlager 11, das im Beispiel als Kugellager ausgebildet ist. Das Kugellager 11 ist so ausgebildet, dass die Schneckenwelle 2 geringfügige Axialbewegungen und geringfügige Änderungen der Drehachse 1 gegenüber dem Gehäuse 9 ausführen kann.

Weiterhin weist der Elektromotor 3 einen Drehmomentsensor auf, der über eine Strommessung oder eine andere Leistungsmessung das Drehmoment bestimmt. Hierfür ist beispielsweise eine Messeinrichtung 23 im Steuerstromkreis des Elektromotors 3 vorgesehen. Dadurch wird eine Überwachung des Einlaufens des Schneckengetriebes möglich.

Alternativ kann auch auf eine Überwachung verzichtet werden und einfach ein Ablauf von vordefinierten Drehzahlen des Elektromotors 3 während des Verfahrens eingestellt werden. Über eine Steuereinheit kann somit die Drehzahl der Schneckenwelle 2 genau eingestellt werden.

An einem motorfernen Ende 12 der Schneckenwelle 2 wird die Schneckenwelle 2 in einer Vorspanneinrichtung 24 drehbar gelagert. Die Vorspanneinrichtung 24 erzeugt in Abhängigkeit von der Steuereinheit eine Vorspannung senkrecht zur Drehachse 1 der Schneckenwelle 2, in Richtung des Schneckenrads 7. Die Größe der Vorspannung kann mit einer Messeinrichtung 25 gemessen werden. Außerdem wird die Drehzahl n der Schneckenwelle gemessen.

Zum Einlaufen einer relativ festen Kunststoffverzahnung des Schneckenrads 7 an die Verzahnung der Schneckenwelle 2 wird eine definierte Vorspannung eingestellt und der Elektromotor 3 im lastfreien Betrieb mit definierter Drehzahl n0 über einen bestimmten Zeitraum gedreht. Die Schneckenwelle 2 ist dabei bevorzugt aus Metall gefertigt. Durch Eigenreibung zwischen der Schneckenwelle 2 und dem Schneckenrad 3 kommt es zu einer Temperaturerhöhung, die zu einer Erwärmung bzw. einem teilweisen Aufschmelzen der Kunststoffverzahnung führt. Dabei erfolgt die Paarung der Kunststoffverzahnung des Schneckenrads 7 zu der Verzahnung der Schneckenwelle 2, und die Fertigungstoleranzen der beiden Komponenten werden kompensiert. Weiterhin wird die spätere Schmierung des Getriebes verbessert, in dem beim Einlaufprozess Molekülketten des Kunststoffschneckenrads 7 im Bereich der Oberfläche unterbrochen werden und sich somit Fetttaschen ausbilden, in denen sich später das Schmiermittel ablagert.

Der Einlaufprozess wird bereits im vormontierten Getriebe vollzogen, so dass sich die Betriebseigenschaften des Getriebes wie Akustik, Reibung und Spiel während des Betriebs nicht wesentlich verändern.

In einem Ausführungsbeispiel ist es vorgesehen eine Vorspannungskraft im Bereich von 100 N bis 1000N senkrecht zur Drehachse der Schneckenwelle, in Richtung auf das Schneckenrad wirken zu lassen. Als erstes wird dafür der Radius des Schneckenrads mittels der Vorspanneinrichtung ausgemessen und der Hochpunkt, d.h. der Punkt auf dem Radumfang, der den größten Abstand zur Drehachse aufweist, ermittelt. Das Einstellen der Vorspannung erfolgt dann an diesem Hochpunkt des Schneckenrades 7. Die Vorspanneinrichtung hält die Schneckenwelle bei laufendem Getriebe ortsfest gegenüber der Drehachse des Schneckenrads 7.

In einer ersten Phase wird die Schneckenwelle 2 zu Beginn mit einer Vorspannung im Bereich von 100N bis 1000N beaufschlagt und dann mittels des Elektromotors 3 mit einer Drehzahl im Bereich von 500 U/min bis 5000 U/min für eine Dauer im Bereich von 5 Sekunden bis 60 angetrieben. Danach kommt die Abkühlphase, in der die Vorspannung auf Werte im Bereich von 20% des zuvor eingestellten Wertes herabgesenkt wird. Besonders bevorzugt wird in dieser Phase die Vorspannung auf Null herabgesenkt. Die Drehzahl der Schneckenwelle wird in dieser Abkühlphase auf Werte zwischen 100 U/min bis 1000 U/min reduziert. Die Zeitdauer der Abkühlphase beträgt 2 Sekunden bis 30 Sekunden.

Während der Abkühlphase wird Getriebefett eingespritzt, welches sich aufgrund der Wärme schnell und gleichmäßig verteilt und zusätzlich zur Abkühlung beiträgt. Die Schneckentemperatur ist dann im Stillstand soweit herabgesenkt, dass kein weiteres Eindrücken der Verzahnung der Schneckenwelle 2 in die Kunststoffverzahnung des Schneckenrads 7 stattfindet.

Die Schneckenwelle ist in ihrer Drehrichtung nicht beschränkt. Es kann vorgesehen sein, die Schneckenwelle beim Einlaufen mit sich wechselnder Drehrichtung zu bewegen, da ständig wechselnde Drehbewegungen auch beim Betrieb des Getriebes in einer Servolenkung zu erwarten sind.

Die Ausführungsformen sind nicht beschränkt auf die Lage der Vorspanneinrichtung. Es ist ebenfalls denkbar, die Vorspanneinrichtung am motornahen Ende der Schneckenwelle anzuordnen.

Der Elektromotor kann durch einen beliebigen Antrieb mit den benötigten Voraussetzungen ersetzt werden. Es ist auch denkbar, dass der für den Einlaufvorgang verwendete Elektromotor der bereits montierte Servomotor der Servolenkung ist.

Nachdem das Einlaufen des Getriebes erfolgreich durchlaufen wurde und eine bestimmte Kraft/Zeit-Kurve und/oder Drehzahl/Zeit-Kurve abgefahren wurde, erfolgt die Montage.

In Figur 2 ist das eingelaufene Getriebe in einem Betriebszustand dargestellt. Die Schneckenwelle 2 ist dabei an ihrem motorfernen Ende 12 in einem Wälzlager 13 gelagert ist. Das Wälzlager 13 weist einen Innenring 14, Wälzkörper 15 und einen Zwischenring 16 auf. Der Zwischenring 16 ist wiederum selbst an seiner Außenseite mit einer Laufrille für Kugeln 17 versehen. Die Kugeln 17 laufen in einem Außenring 18, der schließlich in einem Lagersitz 19 des Gehäuses 9 befestigt ist.

An dem motorseitigen Ende 10 ist die Schneckenwelle 2 an eine Motorwelle 20 eines Elektromotors 21 der Servolenkung über eine flexible Kupplung 22 drehfest gekoppelt.

Im Beispiel ist der Elektromotor 3, der zum Verfahren des Einlaufens eingesetzt ist, verschieden vom Elektromotor 21, der in der elektromechanischen Servolenkung eingesetzt ist. Es ist aber auch denkbar und möglich, das Verfahren mit dem Elektromotor, der in der Servolenkung eingesetzt ist, durchzuführen.

Eine Anfederung des Verzahnungseingriffs der Schneckenwelle und des Schneckenrads, um einen spielfreien Verzahnungseingriff zu erreichen, kann zum Beispiel mit einer Exzenterlagerung an der motorfernen Seite der Schneckenwelle, wie in Figur 2 dargestellt, oder auch mit einer Exzenterlagerung an der motornahen Seite der Schneckenwelle erfolgen.

Das erfindungsgemäß eingelaufene Getriebe eignet sich zum Einbau in elektromechanische Lenkkraftunterstützungen, Überlagerungslenkungen oder Feedbackaktuatoren von Steer-by-wire Lenkungen. Durch das erfindungsgemäße Einlaufen des Getriebes vor der Montage in die Lenkung wird ein Schneckenradgetriebe bereitgestellt, das eine sehr gute Getriebeübertragung mit geringen Spiel, bei niedrigen Toleranzanforderungen an die Getriebezahnräder aufweist.

## Patentansprüche

1. Verfahren zum Einlaufen eines Schneckengetriebes einer elektromechanischen Lenkung, wobei die elektromechanische Lenkung einen elektrischen Motor (3), eine Schneckenwelle (2) mit einem motornahen Ende (10) und einem motorfernen Ende (12), ein auf einer Ausgangs- oder Eingangswelle (8) angeordnetes Schneckenrad (7) und ein Getriebegehäuse (9) aufweist, wobei der Motor (3) mit der Schneckenwelle (2) wirkverbunden ist und die Schneckenwelle (2) mit dem Schneckenrad (7) in einem Eingriff steht, mit folgenden Verfahrensschritten:
a) Erstellen eines vormontierten Zustandes der elektromechanischen Servolenkung, bei dem ein Ende der Schneckenwelle (2), das motornahe Ende (10) oder das motorferne Ende (12) in einem Lager (11) drehbar im Getriebegehäuse (9) gelagert ist und das jeweils andere Ende der Schneckenwelle (2) zur Bildung eines freien Endes in Radialrichtung beweglich ist;
b) Drehbares Lagern des freien Endes der Schneckenwelle (2) in einer einstellbaren Vorspanneinrichtung (24), die dazu eingerichtet ist, die Schneckenwelle (2) in dem Eingriff in Richtung auf das Schneckenrad (7) vorzuspannen; und **gekennzeichnet durch**
c) Einstellen der Vorspanneinrichtung (24) mittels einer Steuereinrichtung in zur Erzeugung einer definierten Vorspannung des Eingriffs;
d) rotatorisches Antreiben der Schneckenwelle (2) in Abhängigkeit von der Steuereinrichtung mit einer definierten Drehzahl (n0) über einen bestimmten Zeitraum.

2. Verfahren zum Einlaufen eines Schneckengetriebes nach Anspruch 1, **dadurch gekennzeichnet, dass** zwischen dem Verfahrensschritt b) und dem Verfahrensschritt c) folgende Schritte vorgesehen sind:
e) Ausmessen eines Hochpunkts des Schneckenrads (7) mittels der Vorspanneinrichtung (24) durch Drehen der Schneckenwelle;
f) Einstellen des Verzahnungseingriffs von Schneckenrad (7) und Schneckenwelle (2) auf den Hochpunkt des Schneckenrads (7).

3. Verfahren zum Einlaufen eines Schneckengetriebes nach Anspruch 1 oder 2, **dadurch gekennzeichnet, dass** nach dem Verfahrensschritt d) folgende Schritte vorgesehen sind:
g) Reduzieren der Vorspannung mittels der Steuereinrichtung auf maximal 20% des definierten Wertes der Vorspannung, bevorzugt auf Null;
h) Einleiten eines Schmiermittels bei laufendem Schneckengetriebe.

4. Verfahren zum Einlaufen eines Schneckengetriebes nach einem der vorhergehenden Ansprüche, **dadurch gekennzeichnet, dass** nach dem Einstellen der Vorspannung das freie Ende der Schneckenwelle (2) zur Festlegung einer definierten Drehachse an einer festen Position gehalten wird.

5. Verfahren zum Einlaufen eines Schneckengetriebes nach einem der vorhergehenden Ansprüche, **dadurch gekennzeichnet, dass** während des Verfahrensschrittes c) eine bestimmte Kraft/Zeit-Kurve und/oder Drehzahl/Zeit-Kurve abgefahren wird.

6. Verfahren zum Einlaufen eines Schneckengetriebes nach Anspruch 5, **dadurch gekennzeichnet, dass** während des Verfahrensschrittes d) in einer ersten Phase die Schneckenwelle (2) mit einer Drehzahl im Bereich von 500 U/min bis 5000 U/min für einen Zeitraum im Bereich von 5 s bis 60 s angetrieben wird und in einer weiteren Phase während der Verfahrensschritte g) und h) die Schneckenwelle (2) mit einer Drehzahl im Bereich von 100 U/min bis 1000 U/min für einen Zeitraum im Bereich von 2 s bis 30 s angetrieben wird.

7. Verfahren zum Einlaufen eines Schneckengetriebes nach einem der vorhergehenden Ansprüche, **dadurch gekennzeichnet, dass** das Schneckenrad (7) aus Kunststoff hergestellt ist.

8. Verfahren zum Einlaufen eines Schneckengetriebes nach einem der vorhergehenden Ansprüche, **dadurch gekennzeichnet, dass** das Schneckengetriebe nach dem Einlaufprozess in elektromechanische Lenkkraftunterstützungen, Überlagerungslenkungen oder Feedbackaktuatoren von Steer-by-wire Lenkungen eingebaut wird.

9. Verfahren zum Einlaufen eines Schneckengetriebes nach Anspruch 7, **dadurch gekennzeichnet, dass** das Schneckenrad (7) als Spritzgussteil gefertigt ist und dass während des Verfahrensschrittes d) Molekülketten der Gusshaut im Bereich der tragenden Oberfläche des Kunststoffschneckenrads (7) unterbrochen werden, so dass sich Fetttaschen ausbilden, die Schmiermittel zur Schmierung des Getriebes aufnehmen können.

10. Elektromechanische Lenkung mit einem eingelaufenen Schneckengetriebe nach einem der vorhergehenden Ansprüche 1-9.

## Claims

1. Method for running in a worm gear of an electromechanical steering system, wherein the electromechanical steering system has an electric motor (3), a worm shaft (2) with an end (10) close to the motor and an end (12) remote from the motor, a worm wheel (7) arranged on an output or input shaft (8), and a gear housing (9), wherein the motor (3) is operatively connected to the worm shaft (2), and the worm shaft (2) is in engagement with the worm wheel (7), having the following method steps:
a) Preparing a preassembled state of the electromechanical servo steering system, in which one end of the worm shaft (2), the end (10) close to the motor or the end (12) remote from the motor, is mounted rotatably in a bearing (11) in the gear housing (9) and the respective other end of the worm shaft (2) is movable in the radial direction in order to form a free end;
b) Rotatably mounting the free end of the worm shaft (2) in an adjustable pretensioning device (24) which is configured to pretension the worm shaft (2) in the direction of the worm wheel (7) in the engagement; and **characterized by**
c) Adjusting the pretensioning device (24) by means of a control device in for generating a defined pretensioning of the engagement;
d) Rotationally driving the worm shaft (2) as a function of the control device at a defined rotational speed (n0) for a determined period of time.

2. Method for running in a worm gear according to Claim 1, **characterized in that** between method step b) and method step c) the following steps are provided:
e) Measuring a high point of the worm wheel (7) by means of the pretensioning device (24) by rotating the worm shaft;
f) Adjusting the toothing engagement of worm wheel (7) and worm shaft (2) to the high point of the worm wheel (7).

3. Method for running in a worm gear according to Claim 1 or 2, **characterized in that** after method step d) the following steps are provided:
g) Reducing the pretensioning by means of the control device to at maximum 20% of the defined value of the pretensioning, preferably to zero;
h) Introducing a lubricant while the worm gear is running.

4. Method for running in a worm gear according to one of the preceding claims, **characterized in that**, after the adjustment of the pretensioning, the free end of the worm shaft (2) is held at a fixed position in order to determine a defined rotational axis.

5. Method for running in a worm gear according to one of the preceding claims, **characterized in that** a defined force/time curve and/or rotational speed/time curve is passed through during method step c).

6. Method for running in a worm gear according to Claim 5, **characterized in that**, during method step d), in a first phase the worm shaft (2) is driven at a rotational speed within the range of 500 rpm to 5000 rpm for a period of time within the range of 5 s to 60 s, and, in a further phase, during method steps g) and h), the worm shaft (2) is driven at a rotational speed within the range of 100 rpm to 1000 rpm for a period of time within the range of 2 s to 30 s.

7. Method for running in a worm gear according to one of the preceding claims, **characterized in that** the worm wheel (7) is produced from plastic.

8. Method for running in a worm gear according to one of the preceding claims, **characterized in that**, after the running-in process, the worm gear is installed in electromechanical steering effort boosts, superposed steering systems or feedback actuators of steer-by-wire steering systems.

9. Method for running in a worm gear according to Claim 7, **characterized in that** the worm wheel (7) is manufactured as an injection molded part, and **in that**, during method step d), molecule chains of the casting skin are interrupted in the region of the supporting surface of the plastics worm wheel (7) such that grease pockets are formed which can accommodate lubricants for lubricating the gear.

10. Electromechanical steering system having a run-in worm gear according to one of the preceding Claims 1-9.

## Revendications

1. Procédé de rodage d'un engrenage à vis sans fin d'une direction électromécanique, la direction électromécanique comprenant un moteur électrique (3), un arbre de vis sans fin (2) doté d'une extrémité (10) proche du moteur et d'une extrémité (12) éloignée du moteur, une roue hélicoïdale (7) disposée sur un arbre de sortie ou d'entrée (8) et un carter d'engrenage (9), le moteur (3) étant relié fonctionnellement à l'arbre de vis sans fin (2) et l'arbre de vis sans fin (2) étant en prise avec la roue hélicoïdale (7), le procédé comprenant les étapes suivantes :
a) la réalisation d'un état prémonté de la direction assistée électromécanique, état dans lequel une extrémité de l'arbre de vis sans fin (2), à savoir l'extrémité (10) proche du moteur ou l'extrémité (12) éloignée du moteur, est montée dans un palier (11) de manière rotative dans le carter d'engrenage (9) et l'autre extrémité respective de l'arbre de vis sans fin (2) est mobile dans la direction radiale pour former une extrémité libre ;
b) le montage de manière rotative de l'extrémité libre de l'arbre de vis sans fin (2) dans un dispositif de précontrainte (24) réglable qui est conçu pour précontraindre l'arbre de vis sans fin (2) en prise en direction de la roue hélicoïdale (7) ; et **caractérisé par**
c) le réglage du dispositif de précontrainte (24) au moyen d'un dispositif de commande dans pour produire une précontrainte définie de la prise ;
d) l'entraînement en rotation de l'arbre de vis sans fin (2) en fonction du dispositif de commande à une vitesse de rotation (n0) définie pendant une durée déterminée.

2. Procédé de rodage d'un engrenage à vis sans fin selon la revendication 1, **caractérisé en ce que** les étapes suivantes sont prévues entre l'étape de procédé b) et l'étape de procédé c) :
e) la mesure d'un point haut de la roue hélicoïdale (7) au moyen du dispositif de précontrainte (24) par rotation de l'arbre de vis sans fin ;
f) le réglage de la prise par engrènement de la roue hélicoïdale (7) et de l'arbre de vis sans fin (2) sur le point haut de la roue hélicoïdale (7).

3. Procédé de rodage d'un engrenage à vis sans fin selon la revendication 1 ou 2, **caractérisé en ce que** les étapes suivantes sont prévues après l'étape de procédé d) :
g) la réduction de la précontrainte, au moyen du dispositif de commande, au maximum à 20 % de la valeur définie de la précontrainte, de préférence à zéro ;
h) l'introduction d'un lubrifiant lorsque l'engrenage à vis sans fin tourne.

4. Procédé de rodage d'un engrenage à vis sans fin selon l'une quelconque des revendications précédentes, **caractérisé en ce qu'**après le réglage de la précontrainte, l'extrémité libre de l'arbre de vis sans fin (2) est maintenue à une position fixe pour déterminer un axe de rotation défini.

5. Procédé de rodage d'un engrenage à vis sans fin selon l'une quelconque des revendications précédentes, **caractérisé en ce que**, pendant l'étape de procédé c), une courbe force-temps déterminée et/ou une courbe vitesse de rotation-temps déterminée est/sont parcourue(s).

6. Procédé de rodage d'un engrenage à vis sans fin selon la revendication 5, **caractérisé en ce que**, pendant l'étape de procédé d), dans une première phase, l'arbre de vis sans fin (2) est entraîné à une vitesse de rotation dans la plage de 500 tr/min à 5000 tr/min pendant une durée dans la plage de 5 s à 60 s et, dans une phase supplémentaire pendant les étapes de procédé g) et h), l'arbre de vis sans fin (2) est entraîné à une vitesse de rotation dans la plage de 100 tr/min à 1000 tr/min pendant une durée dans la plage de 2 s à 30 s.

7. Procédé de rodage d'un engrenage à vis sans fin selon l'une quelconque des revendications précédentes, **caractérisé en ce que** la roue hélicoïdale (7) est fabriquée à partir de matière synthétique.

8. Procédé de rodage d'un engrenage à vis sans fin selon l'une quelconque des revendications précédentes, **caractérisé en ce que** l'engrenage à vis sans fin est installé, après le processus de rodage, dans des dispositifs d'assistance de direction électromécaniques, des directions à superposition ou des actionneurs de rétroaction de directions de type steer-by-wire.

9. Procédé de rodage d'un engrenage à vis sans fin selon la revendication 7, **caractérisé en ce que** la roue hélicoïdale (7) est fabriquée sous forme de pièce moulée par injection et **en ce que**, pendant l'étape de procédé d), des chaînes moléculaires de la croûte de moulage dans la région de la surface porteuse de la roue hélicoïdale en matière synthétique (7) sont interrompues, de telle sorte que des poches de graisse se forment, lesquelles peuvent recevoir les lubrifiants servant à lubrifier l'engrenage.

10. Direction électromécanique comprenant un engrenage à vis sans fin rodé selon l'une quelconque des revendications précédentes 1 à 9.
